# EUROPÄISCHE PATENTSCHRIFT

(11) **EP 1 705 046 B1**
(45) Veröffentlichungstag und Bekanntmachung des Hinweises auf die Patenterteilung: **13.06.2012**
(21) Anmeldenummer: 06005145.5
(22) Anmeldetag: 14.03.2006
(51) Int. Cl.: B60J 10/00

(54) **Extrudierter Dichtungsstrang**
Extruded weather strip
Joint d'étanchéité extrudée

(30) Priorität: 21.03.2005 DE 102005012905
(43) Veröffentlichungstag der Anmeldung: 27.09.2006
(73) Patentinhaber: SaarGummi technologies S.à.r.l., 5445 Schengen (LU)
(72) Erfinder: Dillmann, Martin, 66809 Nalbach (DE); Kotz, Stefan, 66663 Merzig (DE)
(74) Vertreter: Bernhardt, Winfrid

(56) Entgegenhaltungen:
- EP-A- 0 756 956
- EP-A- 1 535 784
- US-A- 5 523 041
- US-A- 5 538 578
- US-A- 5 951 930
- US-A- 5 958 318

## Beschreibung

Die Erfindung betrifft einen extrudierten Dichtungsstrang, insbesondere zur Randabdichtung von Türen oder Öffnungsklappen an Fahrzeugkarosserien, wobei der Dichtungsstrang wenigstens einen Abschnitt aufweist, über dessen Länge sich die Querschnittsfläche des Dichtungsstrangs ändert, wobei der genannte Längenabschnitt (L) außerhalb eines zur gekrümmten Verlegung um eine Ecke vorgesehenen Längenbereichs des Dichtungsstrangs liegt.

Aus der WO 2004 / 039 619 ist ein Dichtungsstrang mit einem schlauchförmigen Dichtungsabschnitt bekannt. In Längenbereichen, die zur Verlegung unter starker Krümmung, insbesondere um eine Türecke herum, vorgesehen sind, weist der Dichtungsstrang Verstärkungen auf. Diese, durch gesteuerte Veränderung des Extrusionsspalts angeformten Verstärkungen sollen verhindern, dass der Dichtungsschlauch in solchen Krümmungsbereichen einfällt und seine Dichtwirkung verliert.

Dichtungsstränge der eingangs erwähnten Art gehen aus der EP-A-1 535 784, US-A-5 958 318, EP-A-0 756 956 sowie der US-A-5 951 930 hervor. Bei der Herstellung dieser bekannten Dichtungsstränge durch Extrusion wird der Extrusionsspalt mit Hilfe mehr oder weniger komplizierter Extrusionswerkzeuge verändert.

Der vorliegenden Erfindung liegt die Aufgabe zugrunde, einen neuen Dichtungsstrang der eingangs erwähnten Art zu schaffen, dessen sich ändernde Querschnittsgeometrie die Herstellung des Dichtungsstrangs durch Extrusion begünstigt.

Der diese Aufgabe lösende Dichtungsstrang nach der Erfindung ist dadurch gekennzeichnet, dass sich die Anordnung der Querschnittsfläche eines Dichtungsabschnitts relativ zur Querschnittsfläche eines Befestigungsabschnitts bei gleichbleibender Form der genannten Querschnittsflächen ändert oder/und sich die Querschnittsfläche wenigstens eines Teils des Dichtungsstrangs bei gleichbleibender Form der Querschnittsfläche verdreht.

Vorteilhaft lässt sich ein solcher Dichtungsstrang im wesentlichen durch translatorische Verschiebung oder/und Drehung den Extrusionsspalt bildender Werkzeugteile herstellen.

Abweichend vom Stand der Technik geht die Erfindung nicht von einem in Stranglängsrichtung weitgehend konstanten, nur in Eckenbereichen abgeänderten Strangquerschnitt aus, sondern sieht Querschnittsvariationen gerade in den Längenbereichen des Dichtungsstrangs vor, in denen die Querschnittsfläche bisher unverändert blieb. Gegebenenfalls ändert sich die Querschnittsfläche über die gesamte Länge des Stranges hinweg. Durch die vorliegende Erfindung wird daher die aus der WO 2004 / 039 619 bekannte "variable Extrusion" in erweitertem Umfang nutzbar gemacht. Entsprechend variablen Querschnitten des erfindungsgemäßen Dichtungsstrangs können Karosserien Dichtungsspalte mit in Längsrichtung variabler Spaltweite aufweisen. Durch die Erfindung ergeben sich also neue Möglichkeiten und Freiräume für Karosseriekonstruktionen. Zum Beispiel kann sich die Dicke von Befestigungsflanschen in deren Längsrichtung ändern und die Flansche können durch Blechlagen in variabler Anzahl gebildet sein. Längenbereiche mit vergrößerter Strangquerschnittsfläche können zum Beispiel für Spaltbereiche vorgesehen sein, in denen größere Fertigungstoleranzen als in benachbarten Bereichen des Dichtungsspalts zugelassen sind oder in denen mit erhöhten Schwankungen der Spaltweite infolge Belastung der Karosserie zu rechnen ist. Während Längenabschnitte, über die hinweg sich die Strangquerschnittsfläche ändert, verhältnismäßig kurz sein können, ändert sich in einer Ausführungsform der Erfindung die Querschnittsfläche nur allmählich, und der betreffende Längenabschnitt ist größer als der zur gekrümmten Verlegung vorgesehene Längenbereich.

Die Querschnittsfläche der Innenkontur eines schlauchförmigen Teils des Dichtungsstrangs kann als solche unverändert bleiben und sich die Innenkontur lediglich in Längsrichtung des Dichtungsstrangs drehen.

Vorzugsweise ist der Dichtungsstrang durch Extrusion unter gesteuerter Veränderung des Werkzeugspalts hergestellt.

Es versteht sich, dass die erwähnten Formen von Querschnittsänderungen auch in einem zur gekrümmten Verlegung vorgesehenen Längenbereich des Dichtungsstrangs vorliegen könnten.

Dichtungsstränge nach der Erfindung kommen z. B. auch zur Randabdichtung der Fenster oder anderer Bauteile von Fahrzeugkarosserien in Betracht.

Die Erfindung wird nachfolgend anhand von Ausführungsbeispielen und der beiliegenden, sich auf diese Ausführungsbeispiele beziehenden Zeichnungen weiter erläutert. Es zeigen:
- Fig. 1: eine Teilseitenansicht eines Dichtungsstrangs mit sich ändernder Querschnittsfläche,
- Fig. 2: Querschnittsansichten des Dichtungsstrangs von Fig. 1 gemäß Schnitten A-A und B-B.
- Fig. 3: den Querschnittsansichten von Fig. 2 entsprechende Ansichten eines weiteren Dichtungsstrangs,
- Fig. 4 bis 10: Dichtungsstränge nach der Erfindung und
- Fig. 11 und 12: weitere Dichtungsstränge.

Ein gemäß Pfeil 1 aus einem Extrusionswerkzeug 2 austretender Dichtungsstrang 3 weist einen Befestigungsabschnitt 4 und einen Dichtungsabschnitt 5 auf. In den Dichtungswerkstoff des Befestigungsabschnitts 4, über den sich der Dichtungsstrang mit einem an einer Fahrzeugkarosserie gebildeten Flansch verbinden lässt, ist zur Verstärkung ein Metallkern 6 eingebettet. Die Einbettung des im Querschnitt U-förmigen Metallkerns 6 erfolgt beim Extrudieren. Der Dichtungsabschnitt 5 des Dichtungsstrangs 3 weist zwei miteinander verbundene Schlauchabschnitte 7 und 8 auf, wobei der Schlauchabschnitt 7 des Dichtungsabschnitts 5 in den Befestigungsabschnitt 4 übergeht.

Der den Schlauchabschnitt 8 betreffende Teil des Spaltes des Extrusionswerkzeugs 2 wird durch ein Steuerprogramm so geändert, dass sich über eine Extrusionslänge L in Richtung einer Querschnittslängsachse X eine Verringerung des Durchmessers des Schlauchabschnitts 8 vom Wert X2 auf den Wert X1 ergibt. Die Länge L beträgt in dem betrachteten Ausführungsbeispiel etwa 300 mm.

Durch das Steuerprogramm lässt sich auf der Gesamtlänge eines zu erzeugenden Dichtungsstrangs ein gewünschtes Längsprofil des Durchmessers entlang der Achse X erzeugen. Es versteht sich, dass mit Hilfe eines Steuerprogramms bei entsprechender Variabilität des Extrusionsspalts über die Variation des Durchmessers hinaus deutlich weitergehende Variationen der Profilquerschnittsfläche erreichbar sind, welche sowohl den Dichtungsabschnitt als auch den Befestigungsabschnitt betreffen können. Es wäre sogar möglich, einen Metallkern, dessen Querschnittsfläche in Längsrichtung variiert, beim Extrudieren in den Dichtungswerkstoff des Dichtungsstranges einzubetten.

Das Steuerprogramm kann ferner ein Schneidwerkzeug ansteuern, welches den extrudierten Strang jeweils entsprechend der Länge der zu produzierenden Dichtungsstränge an den erforderlichen Stellen trennt, so dass jeder Dichtungsstrang das gewünschte Längsprofil aufweist.

In den nachfolgenden Figuren, welche weitere Variationsmöglichkeiten der Querschnittsflöche von Dichtungssträngen in Stranglängsrichtung zeigen, sind gleiche oder gleichwirkende Teile jeweils mit derselben Bezugszahl bezeichnet, wobei der betreffenden Bezugszahl der Buchstabe a, b, c usw. beigefügt ist.

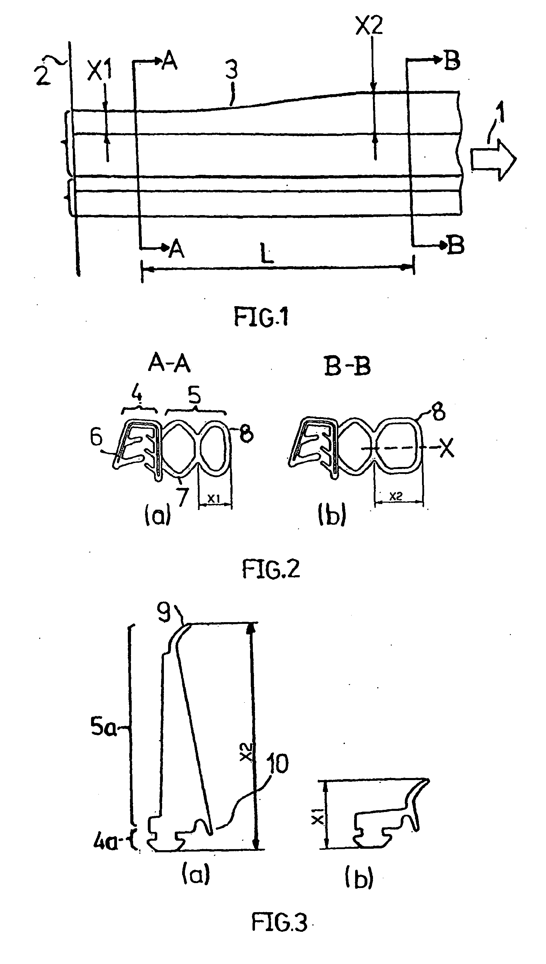

Fig. 3 zeigt ein Dichtungsprofil mit einem Befestigungsabschnitt 4a, der sich in eine hinterschnittene Nut an einer Fahrzeugkarosserie eindrücken lässt. Ein länglicher, keilförmiger Dichtungsabschnitt 5a weist an einem dem Befestigungsabschnitt abgewandten Ende eine Dichtungslippe 9 und an einem zu dem Befestigungsabschnitt 4 seitlich versetzten Abschnitt eine Dichtungslippe 10 auf.

Über eine Extrusionslänge L, die zum Beispiel 200 mm betragen kann, verringert sich bei gleichbleibenden Abmessungen der Dichtungslippen die Höhe des Dichtungsabschnitts 5a, wobei sich die Gesamthöhe des Dichtungsstrangs vom Wert X2 auf den Wert X1 verringert.

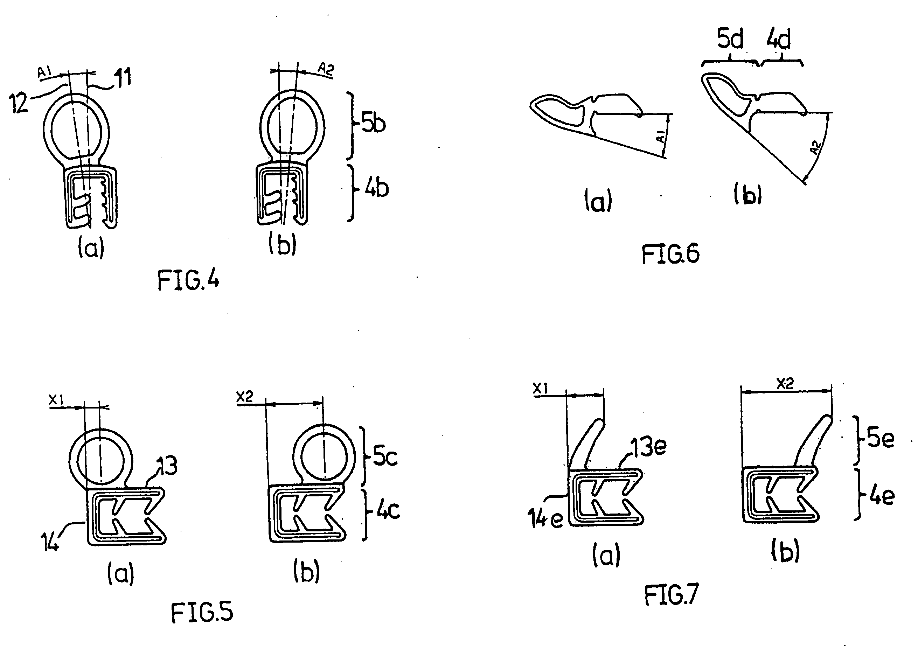

Fig. 4 zeigt einen Dichtungsstrang mit einem Befestigungsabschnitt 4b und einem schlauchförmigen Dichtungsabschnitt 5b. In Längsrichtung des Dichtungsstrangs bleiben die Querschnittsfläche des Befestigungsabschnitts 4b und die Querschnittsfläche des Dichtungsabschnitts 5b als solche konstant. Es ändert sich in Stranglängsrichtung aber die Anordnung der Querschnittsflächen der beiden Abschnitte relativ zueinander. Über eine Extrusionslänge L verschiebt sich der Dichtungsabschnitt 5b senkrecht zur Steckebene 11 des auf einen Karosserieflansch aufsteckbaren Befestigungsabschnitts 4b. Ferner ändert sich über die Extrusionslänge L der Winkel zwischen der Steckebene 11 und einer Ebene 12, die eine Symmetrieebene für den schlauchförmigen Dichtungsabschnitt 5b bildet, vom Wert A2 auf den Wert A1.

Eine Änderung der Anordnung eines Dichtungsabschnitts 5c relativ zu einem Befestigungsabschnitt 4c geht ferner aus Fig. 5 hervor. Ein schlauchförmiger Dichtungsabschnitt 5c verschiebt sich von einem Ende eines Schenkels 13 des U-förmigen Befestigungsabschnitts 4c zum anderen Ende des Schenkels, wobei sich der Abstand einer den Dichtungsabschnitt 5c schneidenden Symmetrieebene 12c vom Basisschenkel 14 des Befestigungsabschnitts 4c über eine Extrusionslänge L vom Wert X2 auf den Wert X1 verringert.

Während Fig. 5 eine rein translatorische Verschiebung des Dichtungsabschnitts 5c relativ zum Befestigungsabschnitt 4c zeigt, geht aus Fig. 6 eine reine Drehung eines Dichtungsabschnitts 5d gegen einen Befestigungsabschnitt 4d hervor, wobei sich über eine Extrusionslänge L ein Neigungswinkel vom Wert A2 auf den Wert A1 verringert.

Das Ausführungsbeispiel von Fig. 7 entspricht dem Ausführungsbeispiel von Fig. 5, wobei der schlauchförmige Dichtungsabschnitt 5c von Fig. 5 in fig. 7 durch eine Dichtungslippe, welche einen Dichtungsabschnitt 5c bildet, ersetzt ist.

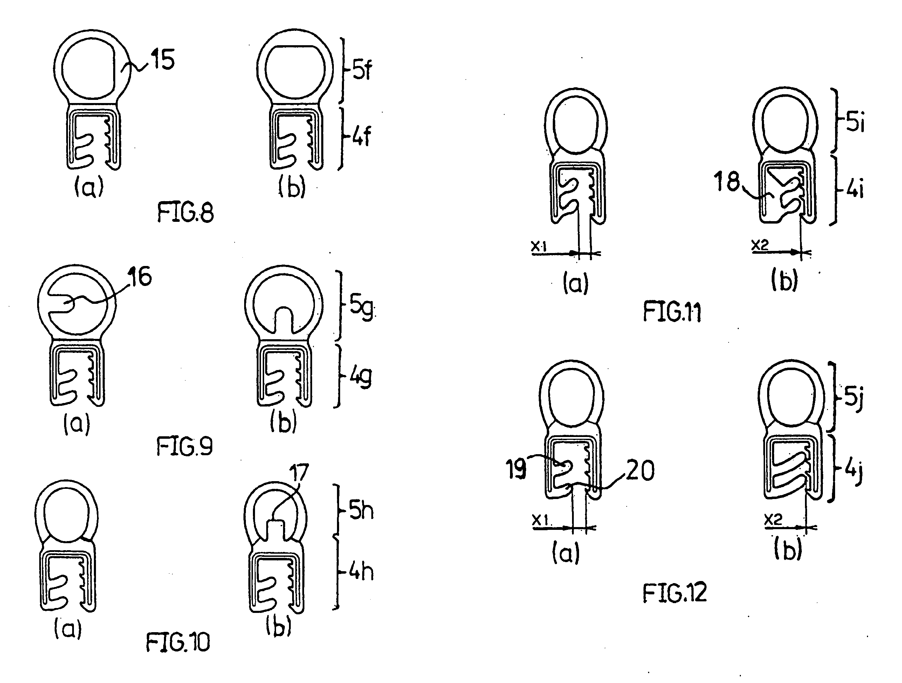

Bei den Ausführungsbeispielen gemäß den Fig. 8 bis 10 ändert sich in Längsrichtung des Dichtungsstrangs nur die Innenkontur eines schlauchförmigen Dichtungsabschnitts 5f, 5g bzw. 5h.

Gemäß Fig. 8 ist eine Wandverdickung 15 des schlauchförmigen Dichtungsabschnitts 5f vorgesehen, welche sich über eine Extrusionslänge L von der in Fig. 8b gezeigten Position in die in Fig. 8a gezeigte Position verdreht.

Bei dem Ausführungsbeispiel von Fig. 9 steht in den Innenraum des schlauchförmigen Dichtungsabschnitts 5g ein Steg 16 vor, welcher sich über eine Extrusionslänge L des Dichtungsstrangs von der in Fig. 9b gezeigten Position in die in Fig. 9a gezeigte Position verdreht.

Gemäß Fig. 10 wächst aus einem an einen Befestigungsabschnitt 4h grenzenden Bereich des Dichtungsabschnitts 5b nach innen ein Steg 17 heraus, welcher zum Beispiel in einem bestimmten Längenbereich des Dichtungsstrangs einen Durchschlagschutz bilden kann.

Die Fig. 11 und 12 betreffen Ausführungsbeispiele, bei denen ausschließlich eine Änderung der Querschnittsfläche eines Befestigungsabschnitts 4i bzw. 4j vorgesehen ist.

Gemäß Fig. 11 ist an einem U-Schenkel des U-förmigen Befestigungsabschnitts 4i eine Verbreiterung 18 gebildet. Durch Verringerung der Verbreiterung über eine Extrusionslänge L ändert sich die Spaltweite des auf einen Karosserieflansch aufsteckbaren Befestigungsabschnitts 4i von einem Wert X2 auf einen Wert X1.

Bei dem Ausführungsbeispiel von Fig. 12 wird eine solche Spaltweitenänderung dadurch erreicht, dass sich die Länge zweier in den U-förmigen Befestigungsabschnitt 4j hinein vorstehender Nasen 19 und 20 verringert.

## Patentansprüche

1. Extrudierter Dichtungsstrang, insbesondere zur Randabdichtung von Türen oder Öffnungsklappen an Fahrzeugkarosserien, wobei der Dichtungsstrang wenigstens einen Abschnitt aufweist, über dessen Länge sich die Querschnittsfläche des Dichtungsstrangs ändert, wobei der genannte Längenabschnitt (L) außerhalb eines zur gekrümmten Verlegung um eine Ecke vorgesehenen Längenbereichs des Dichtungsstrangs liegt,
**dadurch gekennzeichnet,**
**dass** sich die Anordnung der Querschnittsfläche eines Dichtungsabschnitts (5) relativ zur Querschnittsfläche eines Befestigungsabschnitts (4) bei gleichbleibender Form der genannten Querschnittsflächen ändert oder/und sich die Querschnittsfläche wenigstens eines Teils des Dichtungsstrangs bei gleichbleibender Form der Querschnittsfläche verdreht.

2. Dichtungsstrang nach Anspruch 1,
**dadurch gekennzeichnet,**
**dass** der Längenabschnitt (L) größer als der genannte Längenbereich ist.

3. Dichtungsstrang nach Anspruch 1 oder 2,
**dadurch gekennzeichnet,**
**dass** sich die Größe der Querschnittsflächen bzw. Querschnittsfläche ändert.

4. Dichtungsstrang nach einem der Ansprüche 1 bis 3,
**dadurch gekennzeichnet,**
**dass** sich nur die Innenkontur (15, 16) eines schlauchförmigen Teils (5f, 5g) verdreht.

5. Dichtungsstrang nach einem der Ansprüche 1 bis 4,
**dadurch gekennzeichnet,**
**dass** der Dichtungsstrang (3) durch Extrusion unter gesteuerter Veränderung des Werkzeugspalts hergestellt ist.

## Claims

1. Extruded sealing strip, particularly for edge sealing of doors or opening panels at vehicle bodywork, wherein the sealing strip has at least one section, over the length of which the cross-sectional are of the sealing strip changes, wherein the said length section (L) lies outside a length legion of the sealing strip intended for curved placement around a corner, **characterised in that** the arrangement of the cross-sectional area of a sealing strip (5) relative to the cross-sectional area of a fastening section (4) changes with constant shape of the said cross-sectional areas and/or the cross-sectional area of at least a part of the sealing strip twists with constant shape of the cross-section area.

2. Sealing strip according to claim 1, **characterised in that** the length section (L) is larger than the said length region.

3. Sealing strip according to claim 1 or 2, **characterised in that** the size of the cross-sectional areas or cross-sectional area changes.

4. Sealing strip according to any one of claims 1 to 3, **characterised in that** only the inner profile (15, 16) of a hose-shaped part (5f, 5g) twists.

5. Sealing strip according to any one of claims 1 to 4, **characterised in that** the sealing strip (3) is produced by extrusion with controlled chance of the tool gap.

## Revendications

1. Joint d'étanchéité extrudé, en particulier pour rendre étanche le bord de portes ou de volets d'ouverture à des carrosseries de véhicule, où le joint d'étanchéité présente au moins une section sur la longueur de laquelle la face en section transversale du joint d'étanchéité se modifie, où la section longitudinale précitée (L) se situe à l'extérieur d'une zone de longueur du joint d'étanchéité prévue pour la pose courbée autour d'un coin, **caractérisé en ce que** l'agencement de la face en section transversale d'une section d'étanchéité (5) se modifie relativement à la face en section transversale d'une section de fixation (4), la forme des faces en section transversale précitée restant identique et/ou la face en section transversale fait tourner au moins une partie du joint d'étanchéité, la forme de la face en section transversale restant identique.

2. Joint d'étanchéité selon la revendication 1, **caractérisé en ce que** la section longitudinale (L) est plus grande que la zone de longueur précitée.

3. Joint d'étanchéité selon la revendication 1 ou 2, **caractérisé en ce que** la grandeur des faces en section transversale respectivement de la face en section transversale se modifie.

4. Joint d'étanchéité selon l'une des revendications 1 à 3, **caractérisé en ce que** seulement le contour intérieur (15, 16) d'une partie tubulaire (5f, 5g) tourne.

5. Joint d'étanchéité selon l'une des revendications 1 à 4, **caractérisé en ce que** le joint d'étanchéité (3) est réalisé par extrusion sous une modification commandée de la fente d'outil.
